# EUROPÄISCHE PATENTSCHRIFT

(11) **EP 1 510 119 B1**
(45) Veröffentlichungstag und Bekanntmachung des Hinweises auf die Patenterteilung: **18.03.2009**
(21) Anmeldenummer: 04019703.0
(22) Anmeldetag: 19.08.2004
(51) Int. Cl.: A01B 29/04, A01B 73/00

(54) **Fahrwerk für eine landwirtschaftliche Bodenbearbeitungsmaschine**
Wheeled support for soil working machine
Support ä roues pour machine de travail du sol

(30) Priorität: 25.08.2003 DE 20313105 U
(43) Veröffentlichungstag der Anmeldung: 02.03.2005
(73) Patentinhaber: Alois Pöttinger Maschinenfabrik Ges. m.b.H., 4710 Grieskirchen (AT)
(72) Erfinder: Preimess, Hans-Jörg, AT-9811 (AT)
(74) Vertreter: Thoma, Michael

(56) Entgegenhaltungen:
- WO-A-20/04073381
- DE-C- 66 140
- DE-U- 9 010 178
- US-A- 2 270 390
- US-A- 4 519 460

## Beschreibung

Die vorliegende Erfindung betrifft ein Fahrwerk für eine landwirtschaftliche Bodenbearbeitungsmaschine mit mehreren nebeneinander in Reihe angeordneten Reifensätzen, die einen Reifenpack nach Art einer unterteilten Walze bilden (siehe z.B. DE-U-9010178).

Bei gewissen landwirtschaftlichen Bodenbearbeitungsmaschinen wie Kreiseleggen, Grubber und insbesondere Drillmaschinen wurde in jüngerer Zeit vorgeschlagen, die Fahrwerksräder mit den Packerrädern der Bodenverdichtungseinheit zusammenzufassen, um gegenüber Maschinen mit hintereinander angeordneten Fahrwerksrädern und Bodenverdichtungs-Packerrädern die Baulänge zu verkürzen. Bei solchen Fahrwerken, die die Fahrwerksräder und die Bodenverdichtungsräder zu einer einachsigen Einheit zusammenfassen, ergeben sich jedoch diverse Probleme. Insbesondere auf unebenen Fahrbahnen, wie z. B. Feldwegen mit einer zentralen Dammkrone, ergibt sich ein instabiles Fahrverhalten, insofern als die Transporträder vom Boden abgehoben werden können. Die Transportgeschwindigkeiten sind daher stark begrenzt. Zum anderen leidet bei mit der Packereinheit zusammengefassten Fahrwerken die Bremsbarkeit der Maschine. Zudem ist ein Problem der stärkere Verschleiß der Transporträder gegenüber den Rädern der Packereinheit, was bei der Bodenbearbeitung zu ungleichmäßigen Bodendrücken führt.

Der vorliegenden Erfindung liegt daher die Aufgabe zugrunde, ein verbessertes Fahrwerk der eingangs genannten Art zu schaffen, das Nachteile des Standes der Technik vermeidet und letzteren in vorteilhafter Weise weiterbildet. Vorzugsweise soll bei der Feldbearbeitung eine gleichmäßige Verteilung der Bodenaufstandskraft, beim Transport auf Wegen und Straßen jedoch ein stabileres Fahrverhalten erreicht werden.

Diese Aufgabe wird erfindungsgemäß durch ein Fahrwerk gemäß Anspruch 1 gelöst. Vorteilhafte Ausgestaltungen der Erfindung sind Gegenstand der abhängigen Ansprüche.

Erfindungsgemäß ist also ein mittlerer, zwischen zwei seitlichen Reifensätzen angeordneter Reifensatz relativ zu den seitlichen Reifensätzen höhenbeweglich gelagert, wobei eine Verriegelungseinrichtung vorgesehen ist, mittels derer der mittlere Reifensatz in eine Arbeitsstellung auf Höhe der Seitenreifensätze verriegelbar und in eine höhenbewegliche Fahrstellung entriegelbar ist. Bei der Feldbearbeitung können durch die Verriegelungseinrichtung die mittleren und seitlichen Reifensätze starr miteinander gekoppelt werden, so dass sie einen walzenartigen Reifenpack bilden und die Bodenaufstandskraft der Maschine gleichmäßig über alle Räder verteilt auf den Boden übertragen. Für den Straßentransport können dann die innenliegenden Räder gegenüber den äußeren Rädern entkoppelt werden, so dass die inneren Räder keine Aufstandskraft mehr übertragen können. Hierdurch kann eine erhöhte Seitenstabilität auf Feldwegen mit Dammkrone gewährleistet werden. Weiter kann durch die Entkoppelung des innenliegenden Reifensatzes eine definierte Bremskraftverteilung über die außenliegenden Seitenreifen erreicht werden, wozu diese vorteilhafterweise mit einer entsprechenden Bremseinrichtung versehen sind.

Der mittlere Reifensatz kann grundsätzlich aus nur einem einzigen Reifen bestehen. Vorzugsweise jedoch umfasst er zumindest ein Zwillingsreifenpaar. Bei größeren Maschinen kann der mittlere Reifensatz gemäß einer vorteilhaften Ausführung der Erfindung vier oder mehr Reifen umfassen. Der gesamte Reifenpack einschließlich der Seitenreifen umfasst vorzugsweise zumindest sechs Reifen, wobei jeder seitliche Reifensatz und jeder mittlere Reifensatz zwei nach Art eines Zwillingsreifenpaares angeordnete Reifen umfasst. Bei größeren Maschinenbreiten umfasst das Fahrwerk mindestens acht nebeneinander in Reihe angeordnete Reifen, wobei in diesem Fall vorzugsweise die mittleren vier Reifen von den äußeren vier Reifen entkoppelbar sind.

In Weiterbildung der Erfindung können die Seitenreifensätze und der damit verriegelte mittlere Reifensatz gemeinsam höheneinstellbar gelagert sein. Wenn die Verriegelungseinrichtung in ihrer verriegelnden Stellung ist, ist zwar sichergestellt, dass die Seitenreifensätze und der mittlere Reifensatz miteinander starr gekoppelt und auf demselben Höhenniveau angeordnet sind. Das genannte Höhenniveau aller Reifensätze kann jedoch über eine geeignete Höheneinstellvorrichtung eingestellt werden, so dass in der Arbeitskonfiguration die Fahrhöhe der Bodenbearbeitungsmaschine über dem Boden eingestellt werden kann. Gegebenenfalls können auch alle Reifen gemeinsam federn, wozu sie entsprechend aufgehängt sein können.

Der mittlere Reifensatz kann an einer vorzugsweise etwa parallel zur Fahrtrichtung verlaufenden Schwinge gelagert sein, die schwenkbar an einem Schwingenträger gelagert ist und mittels der Verriegelungseinrichtung relativ zu dem Schwingenträger verriegelbar ist. Der genannte Schwingenträger selbst kann zumindest eine weitere Schwinge tragen, an der ein Seitenreifensatz gelagert ist. Die genannte weitere Schwinge für den entsprechenden Seitenreifensatz ist mit dem Schwingenträger vorzugsweise starr verbunden. Der Schwingenträger selbst kann schwenkbar gelagert, insbesondere um seine Längsachse drehbar gelagert sein, so dass durch Drehen des Schwingenträgers die den Seitenreifensatz tragende Schwinge und die den mittleren Reifensatz tragende Schwinge, wenn diese verriegelt ist, entsprechend geschwenkt wird, wodurch sich eine Höhenverstellung der Räder ergibt. Dem Schwingenträger ist dabei vorzugsweise ein fremdenergiebetätigbarer Schwenkantrieb zugeordnet, durch den die an dem Schwingenträger gelagerten Reifen höheneingestellt werden können. Der Schwenkantrieb kann verschieden ausgebildet sein. Nach einer vorteilhaften Ausführung kann der Schwenkantrieb von einem Hydraulikzylinder gebildet sein, der an der den Seitenreifen tragenden Schwinge sowie am gegenüberliegenden Ende fahrwerkrahmenfest angelenkt ist. Durch Längenänderung des Hydraulikzylinders kann die den Seitenreifen tragende Schwinge geschwenkt werden. Über die Kopplung durch den Schwingenträger und die Verriegelungseinrichtung kann gleichzeitig der mittlere Reifensatz entsprechend höheneingestellt werden.

In Weiterbildung der Erfindung umfasst das Fahrwerk einen rechten Schwingenträger, der einen rechten Seitenreifensatz trägt, und einen linken Schwingenträger, der einen linken Seitenreifensatz trägt. Die beiden Schwingenträger sind vorzugsweise koaxial angeordnet und tragen an ihren inneren Enden jeweils eine Schwinge für einen mittleren Reifensatz, die durch die Verriegelungseinrichtung mit dem jeweiligen Schwingenträger starr verriegelbar ist. An den beiden mittleren Schwingen ist jeweils ein mittlerer Reifensatz gelagert. Soweit nur ein mittlerer Reifensatz vorgesehen sein soll, kann ein einziger Schwingenträger vorgesehen sein, an den die beiden Seitenreifensätze mittels jeweils einer Schwinge angelenkt sind. Es können jedoch auch hier zwei separate rechte und linke Schwingenträger vorgesehen sein. In beiden Fällen ist eine einzelne mittlere Schwinge vorgesehen, an der der nur eine mittlere Reifensatz gelagert ist. Die Schwinge ist auch hier drehbar zu dem Schwingenträger aufgehängt und über die Verriegelungseinrichtung starr mit den beiden Schwingenträgern verriegelbar.

Die Verriegelungseinrichtung zur Kopplung des mittleren Reifensatzes bzw. der mittleren Reifensätze mit den seitlichen Reifensätzen kann grundsätzlich verschieden ausgebildet sein. In jedem Fall ist sie vorzugsweise automatisch betätigbar ausgebildet. Sie kann einen Riegel sowie einen diesem zugeordneten fremdenergiegespeisten Riegelbetätiger aufweisen, so dass die Verriegelungseinrichtung automatisch angesteuert und betätigt werden kann.

Der Riegel selbst kann ebenfalls verschieden ausgebildet sein. Denkbar ist es, einen linear verschieblichen Riegel vorzusehen, der in eine komplementär ausgebildete Riegelausnehmung einfahren kann. Um jedoch auch bei Fluchtungsfehlern zwischen der Schwinge und dem schwingenträgerstarren Gegenstück problemlos verriegeln zu können, ist der Riegel in Weiterbildung der Erfindung als schwenkbare Riegelklaue ausgebildet. Der Riegelbetätiger kann als daran angelenkter, Kraftheber ausgebildet sein, der sich mit seinem anderen Ende an einem Schwingenabschnitt abstützen kann und den Riegel entsprechend schwenkt. Durch die schwenkbare Riegelklaue kann die Verriegelung auch in ihre verriegelnde Stellung gefahren werden, wenn das komplementäre Riegelschlossstück nicht exakt fluchtet. Die schwenkbare Riegelklaue drückt die beiden zu verriegelnden Teile während der Verriegelungsbewegung in die exakt ausgerichtete Stellung.

Die Verriegelungseinrichtung kann unmittelbar an der den mittleren Reifensatz tragenden Schwinge angeordnet sein und mit der Riegelklaue einen schwingenträgerstarren Anschlag von unten her umgreifen. Es versteht sich, dass die Anordnung auch umgekehrt sein könnte, so dass die Verriegelungseinrichtung am schwingenträgerstarren Anschlag befestigt ist und mit der Riegelklaue die den mittleren Reifensatz tragende Schwinge umgreift.

In der zuvor beschriebenen Anordnung mit zwei mittleren, jeweils schwenkbar an den Schwingenträgern gelagerten Schwingen für zwei mittlere Reifensätze, umfasst die Verriegelungseinrichtung vorzugsweise zwei Riegel, mit denen die beiden mittleren Schwingen jeweils bezüglich einer der beiden Schwingenträger verriegelt werden können. Die Verriegelungseinrichtung koppelt hierbei auch die beiden drehbaren Schwingenträger miteinander, und zwar über die beiden mittleren Schwingen, mit denen die Schwingenträger gekoppelt werden.

Die beiden Schwingen für die beiden mittleren Reifensätze können über einen Querträger starr miteinander verbunden sein.

Die Verriegelungseinrichtung umfasst vorzugsweise zwei gegensinnig schwenkbare Klauen, die mittels eines gemeinsamen Krafthebers auseinander und zusammen schwenkbar sind. Es wäre denkbar, jeder der beiden schwenkbaren Riegelklauen einen separaten Kraftheber, insbesondere in Form eines Hydraulikzylinders, zuzuordnen. Hierdurch könnte ggf. nur einer der mittleren Reifensätze verriegelt werden. Vorzugsweise jedoch werden die beiden gegensinnig schwenkbaren Riegelklauen durch eine gemeinsame Betätigungseinrichtung vorzugsweise in Form eines Hydraulikzylinders betätigt. Es könnten hier auch Spindelantriebe oder andere Riegelbetätiger vorgesehen sein. Eine einfache und effiziente Betätigung wird jedoch durch einen Hydraulikzylinder erreicht.

Die Erfindung wird nachfolgend anhand bevorzugter Ausführungsbeispiele und zugehöriger Zeichnungen näher erläutert. In den Zeichnungen zeigen:
- Fig. 1:: eine Seitenansicht einer Drillmaschine mit einem Fahrwerk nach einer bevorzugten Ausführungsform der vorliegenden Erfindung,
- Fig. 2:: eine perspektivische Gesamtansicht der Drillmaschine aus Fig. 1, die die Anordnung der Reifen des Fahrwerks zeigt,
- Fig. 3:: eine perspektivische, ausschnittsweise Darstellung des Fahrwerks der Drillmaschine aus den vorhergehenden Figuren, wobei der Übersichtlichkeit halber die Räder von den Radlagern demontiert und nicht gezeigt sind,
- Fig. 4:: eine Draufsicht auf das Fahrwerk aus Fig. 3,
- Fig. 5:: eine Rückansicht des Fahrwerks aus den beiden vorhergehenden Figuren, wobei die beiden mittleren Schwingen durch die Verriegelungseinrichtung verriegelt mit den die seitlichen Schwingen tragenden Schwingenträgern gezeigt sind,
- Fig. 6:: eine Rückansicht des Fahrwerks ähnlich Fig. 5, wobei die mittleren Schwingen entriegelt sind, und
- Fig. 7:: eine schematische Frontansicht einer Drillmaschine mit einer alternativen Ausführung des Fahrwerks, bei dem einerseits seitlich außen zwei zusätzliche Reifen zuschaltbar angeordnet und die mittleren Reifensätze aktiv anhebbar sind.

Die an einen Schlepper anbaubare Bodenbearbeitungsmaschine, die das in bevorzugter Ausführung dargestellte Reifenpackerfahrwerk benutzt, ist in den Zeichnungen als Drillmaschine dargestellt. Sie besitzt einen Maschinenrahmen 1, der einerseits über eine Dreipunktanlenkung 2 am Schlepper angehängt werden kann, und andererseits von dem Fahrwerk 3 getragen wird. Den Reifen des Fahrwerks 3 läuft eine der Bodenauflockerung dienende Bodenbearbeitungseinheit 5 voraus. Der aufgelockerte Boden wird sodann über das Packerfahrwerk 3 wieder verdichtet. Dem Fahrwerk 3 läuft sodann eine Sävorrichtung 6 nach, die von einem auf dem Maschinenrahmen 1 sitzenden Saatgutspeicher 7 gespeist wird und Saatgut in den Boden einbringt.

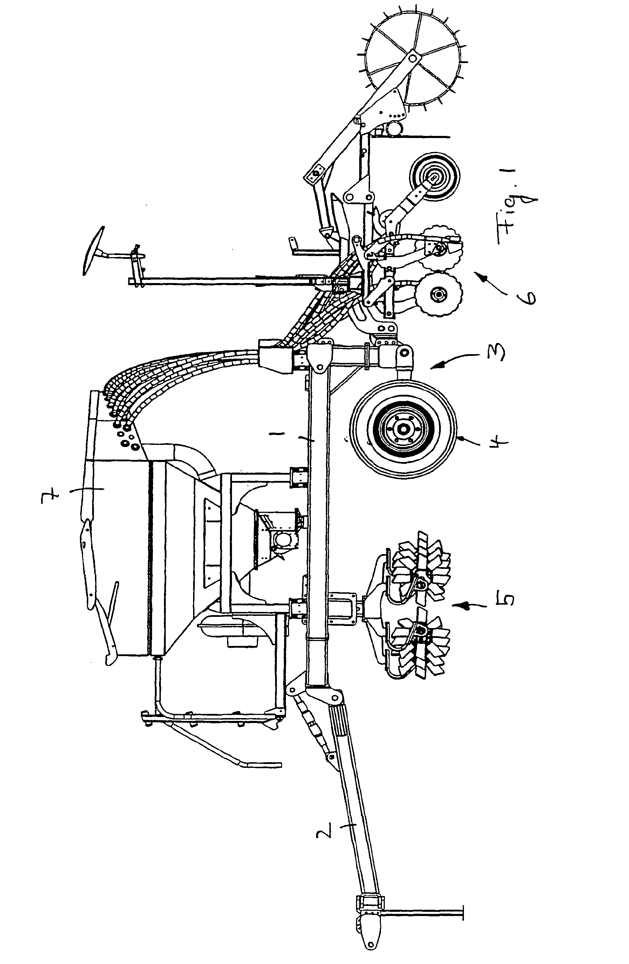

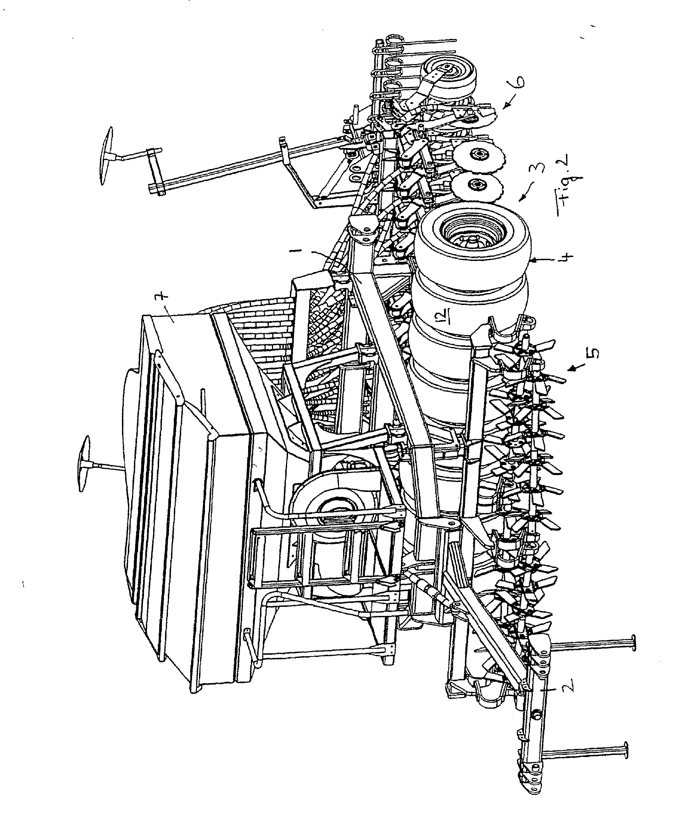

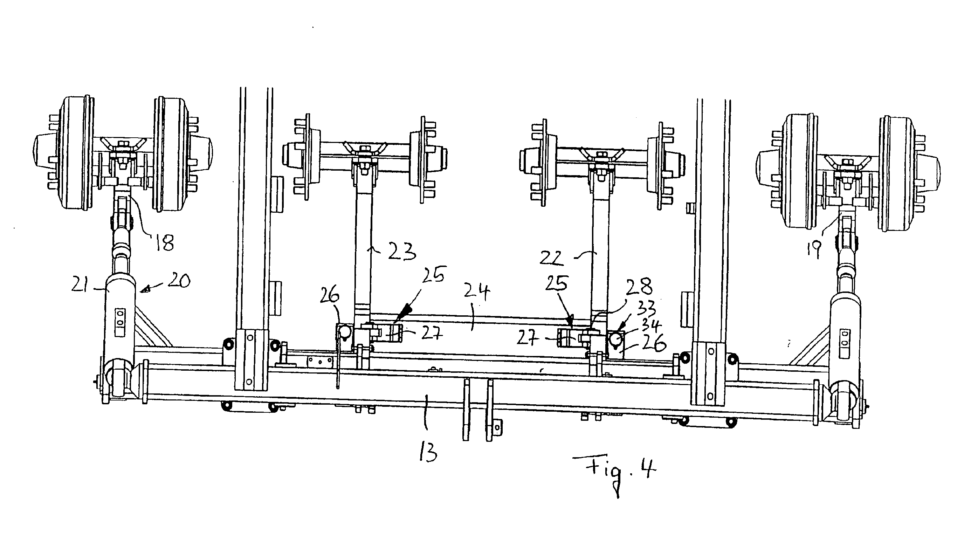

Das Fahrwerk 3 umfasst in der gezeichneten Ausführungsform nach den Figuren 1 bis 6 zwei rechts und links seitlich angeordnete Seitenreifensätze 8 und 9 sowie zwei zwischen diesen angeordnete mittlere Reifensätze 10 und 11, die jeweils nach Art eines Zwillingreifenpaares unmittelbar nebeneinander angeordnete Reifen aufweisen, die an einem gemeinsamen Achsträger gelagert sind. Die Reifen besitzen in der gezeichneten Ausführung sämtliche denselben Durchmesser und sind unmittelbar nebeneinander in einer Reihe angeordnet, so dass sie einen Reifenpack 12 nach Art einer unterteilten Walze bilden.

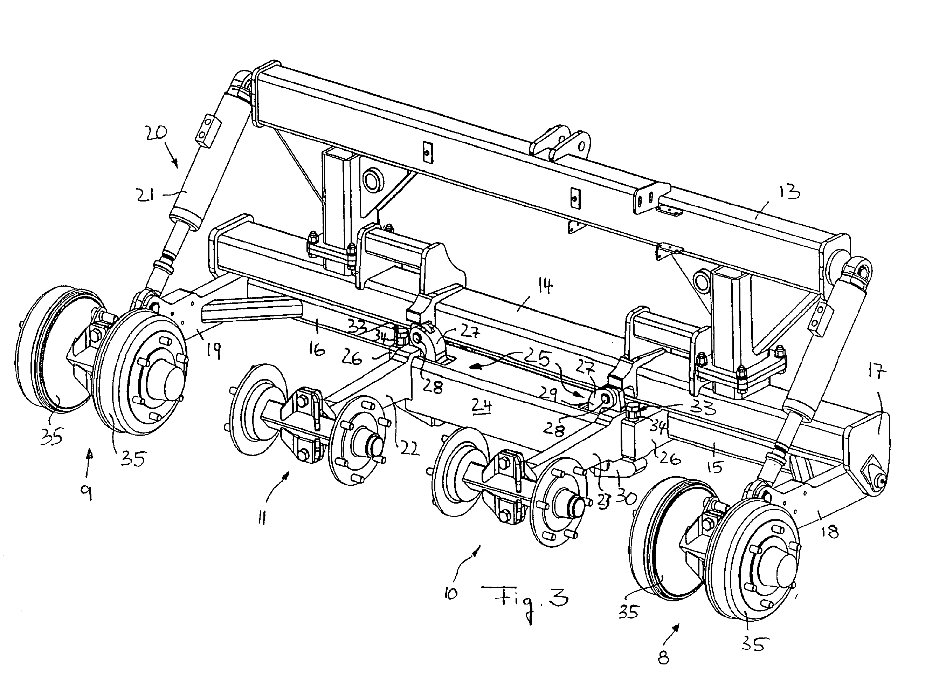

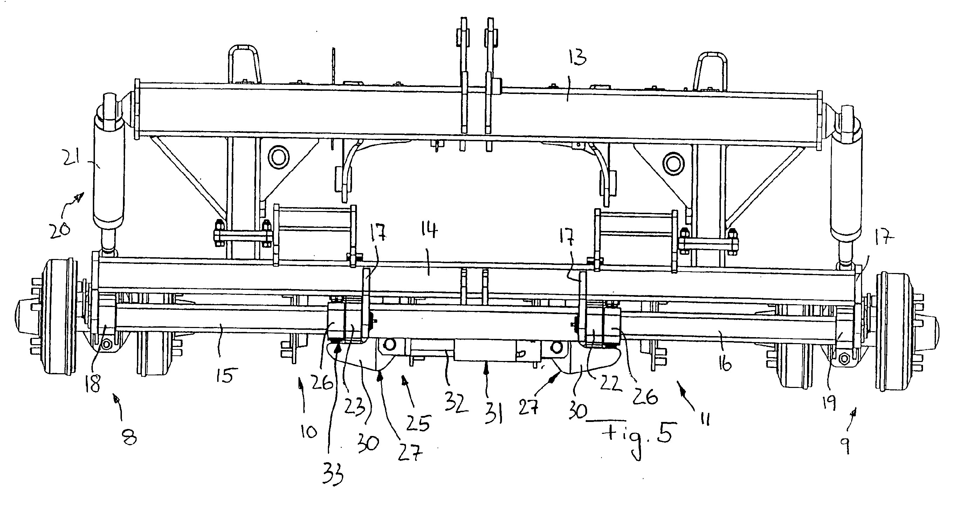

Wie Figur 3 zeigt, umfasst das Fahrwerk einen starren Fahrwerksrahmen 13 mit einem sich im wesentlichen über die gesamte Maschinenbreite erstreckenden Querträger 14. An dem Querträger 14 des Fahrwerksrahmens 13 sind koaxial ein rechter und ein linker Schwingenträger 15, 16 gelagert, die um eine quer zur Fahrtrichtung verlaufende Drehachse drehbar gelagert sind. Wie Figur 5 zeigt, sind die Schwingenträger 15 und 16 jeweils zwischen zwei Lagerflanschen 17 drehbar aufgehängt. An ihren äußeren Enden sind die Schwingenträger 15 und 16 starr mit jeweils einer Seitenschwinge 18, 19 verbunden, die sich parallel zur Fahrtrichtung erstreckt und an ihren frei auskragenden Enden jeweils einen Seitenreifensatz 8 bzw. 9 trägt.

Die Seitenschwingen 18 und 19 sind um die von den Schwingenträgern 15 und 16 definierten Achsen auf und ab schwenkbar, und zwar mittels eines Schwenkantriebs 20 in Form zweier Hydraulikzylinder 21, die einerseits an den Seitenschwingen 18 bzw. 19 und andererseits an dem Fahrwerksrahmen 13 angelenkt sind. Ist eine Höhenverstellung der Seitenreifensätze nicht gewünscht oder nicht erforderlich, können die Hydraulikzylinder 21 ggf. in Form von gefederten Stoßdämpfereinheiten ausgebildet sein.

Im Bereich der inneren Enden der Schwingenträger 15 und 16 sind zwei weitere Schwingen 22 und 23 angeordnet, die um eine gemeinsame Schwenkachse vorzugsweise koaxial zur Achse der Schwingenträger 15 und 16 schwenkbar gelagert sind. Die beiden mittleren Schwingen 22 und 23 sind über einen Querträger 24 starr miteinander verbunden, so dass die beiden mittleren Reifensätze 10 und 11 gemeinsam miteinander höhenverschwenkbar sind.

Um die mittleren Reifensätze 10 und 11 mit den Seitenreifensätzen 8 und 9 koppeln zu können, ist eine Verriegelungseinrichtung 25 vorgesehen, mit Hilfe derer die beiden mittleren Schwingen 22 und 23 mit den Seitenschwingen 18 und 19 starr gekoppelt werden können. Insbesondere kann durch die Verriegelungseinrichtung 25 jede der Schwingen 22 und 23 mit dem jeweiligen Schwingenträger 15 und 16 starr verriegelt werden. Wie am besten Figur 3 zeigt, besitzen die Schwingenträger 15 und 16 etwa in Richtung der mittleren Schwingen 22 und 23 vorspringende, starr angeformte Verriegelungsanschläge 26. Um die Schwingen 22 und 23 mit den Verriegelungsanschlägen 26 verriegeln zu können, besitzt die Verriegelungseinrichtung 25 zwei schwenkbar gelagerte Riegelklauen 27, die um im wesentlichen parallel zu den Schwingen 22 und 23 gelagerte Achsen 28 schwenkbar an den Schwingen 22 bzw. 23 gelagert sind, wobei sich die Achsen 28 etwa auf der Oberseite der Schwingen 22 und 23 erstrecken. Die Riegelklauen 27 umgreifen in ihrer verriegelnden Stellung sowohl die Schwingen 22 bzw. 23 als auch die schwingenstarren Verriegelungsanschläge 26 von unten her. Die Riegelklauen 27 besitzen, wie die Figuren 3 und 5 zeigen, einen ersten Klauenabschnitt 29, der sich in der verriegelten Stellung im wesentlichen an die seitliche Flanke der jeweiligen Schwinge anschmiegt und einen dazu im wesentlichen rechtwinklig angeordneten zweiten Klauenabschnitt 30, der sich im wesentlichen horizontal erstreckt und die Unterseite der Schwingen 22 und 23 sowie des Anschlags 26 umgreift und sich an diese anschmiegt.

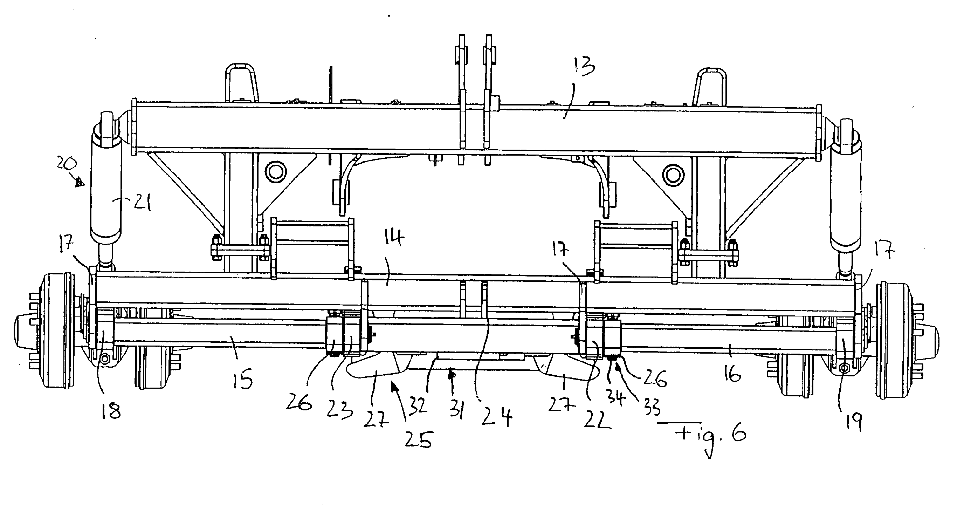

Wie Figur 5 zeigt, sind die beiden Riegelklauen 27 durch einen Riegelbetätiger 31 in Form eines Hydraulikzylinders 32 miteinander verbunden, der in der gezeichneten Ausführungsform im Übergangsbereich zwischen den Klauenabschnitten 29 und 30 jeweils an den Riegelklauen 27 angelenkt ist. Wird der Hydraulikzylinder 32 zusammengefahren, so dass er sich verkürzt, werden die Riegelklauen 27 in ihre entriegelte Stellung geschwenkt (vgl. Figur 6), in der die Schwingen 22 und 23 sich relativ zu den Anschlägen 26 und damit relativ zu den Schwingenträgern 15 und 16 bewegen können. Wird der Hydraulikzylinder 32 auseinandergefahren und damit verlängert, werden die Riegelklauen 27 in ihre verriegelnden Stellungen geschwenkt, in denen sie jeweils eine Schwinge 22 oder 23 sowie den zugehörigen Anschlag 26 von unten her umgreifen. In dieser Stellung verhindern die Riegelklauen 27, dass die Schwingen 22 und 23 unabhängig von den Seitenreifensätzen 8 und 9 nach oben geschwenkt werden. Die mittleren Reifensätze 10 und 11 übertragen damit ebenso die Aufstandskraft wie die seitlichen Reifensätze 8 und 9.

Um einen übermäßigen Verschleiß der Seitenreifen, die sowohl bei der Bodenbearbeitung als auch beim Transport Verschleiß ausgesetzt werden, ausgleichen zu können, sind der Verriegelungseinrichtung 25 Einstelleinrichtungen 33 zugeordnet, mit Hilfe derer die exakte Lage der Schwinge 22 bzw. der Schwinge 23, die die mittleren Reifensätze tragen, bezüglich der Schwingenträger 15 und 16 und damit der seitlichen Schwingen 18 und 19 in der verriegelnden Stellung eingestellt werden kann. In der gezeichneten Ausführungsform sind die Einstelleinrichtungen 33 an den Riegelanschlägen 26 vorgesehen. Auch wenn dies eine besonders bevorzugte Ausführung ist, versteht es sich, dass die Einstelleinrichtungen 33 grundsätzlich auch an den Schwingen 22 oder 23 und/oder den Riegelklauen 27 angeordnet sein könnten. Wie Figur 3 zeigt, kann mit den Einstelleinrichtungen 33 die effektive Lage der von den Riegelklauen 27 gegriffenen Flanke der Anschläge 26 eingestellt werden. In der gezeichneten Ausführungsform bestehen die Einstelleinrichtungen 33 aus durch die Anschläge 26 hindurch geschraubten Schraubbolzen 34, deren Überstehen auf der von den Riegelklauen 27 gegriffenen Unterseiten die Lage der Schwingen 22 und 23 bezüglich der Seitenschwingen 18 und 19 in der verriegelten Stellung definiert. Durch entsprechende Bewegung der Einstelleinrichtungen 33 kann sichergestellt werden, dass die Aufstandsflächen aller Reifen in einer gemeinsamen Ebene liegen.

Ist die Verriegelungseinrichtung 25 entriegelt, können die mittleren Reifensätze ohne das Gewicht der Maschine zu tragen, frei schwimmend auf dem Boden laufen. Insbesondere können sie auf Feldwegen auf der Dammkrone laufen, während die Seitenreifen in den Fahrspuren laufen und das Gewicht der Maschine tragen. In der verriegelten Stellung sind die mittleren Reifensätze jedoch zwangsweise auf demselben Aufstandsflächeniveau wie die Seitenreifen gehalten, so dass eine gleichmäßige Aufteilung der Aufstandskräfte erreicht wird. Von Vorteil ist dabei eine gewisse Nachgiebigkeit zwischen den einzelnen Reifensätzen, durch die Bodenunebenheiten in gewissem Maße ausgeglichen werden können. Einerseits bilden die Schwingenträger 15 und 16 Torsionsstäbe, durch die die Seitenreifensätze 8 und 9 leicht auf und ab schwenken können gegenüber den mittleren Reifensätzen 10 und 11. Zum anderen sind die Reifensätze jeweils am auskragenden Ende der jeweiligen Schwinge 18, 19 bzw. 22, 23 gelagert, und zwar über quer auskragende Achsschenkel. Hierdurch können die Schwingen als Torsionsstäbe wirken und einen leichten Versatz zwischen den Reifen eines Reifensatzes zulassen. Die spezielle Konstruktion der Aufhängung der Reifensätze ermöglicht eine besonders schonende Bodenbearbeitung.

Wie Figur 3 zeigt, sind den Radlagern der Räder der Seitenreifensätze 8 und 9 jeweils Bremseinrichtungen 35, die beispielsweise als Trommelbremsen ausgebildet sein können, zugeordnet. Hierdurch können die Seitenreifensätze 8 und 9 präzise gebremst werden, wodurch ein definiertes Bremsverhalten beim Transport der Maschine erreicht wird. Die mittleren Reifensätze 10 und 11 hingegen, die im Transport schwimmend ohne Übertragung von Aufstandskraft über den Boden geführt werden, können frei von Bremseinrichtungen ausgebildet sein.

Obwohl in der gezeichneten Ausführung zwei mittlere Reifensätze 10 und 11 mit insgesamt vier Reifen vorgesehen sind, versteht es sich, dass bei schmäleren Maschinen möglicherweise nur ein mittlerer Reifensatz mit zwei Reifen vorgesehen sein kann, oder umgekehrt bei breiteren Maschinen mehr als zwei mittlere Reifensätze mit ggf. mehr als vier Reifen vorgesehen sein können. In diesem Fall könnte beispielsweise eine weitere mittlere Schwinge starr an dem Querträger 24 befestigt sein.

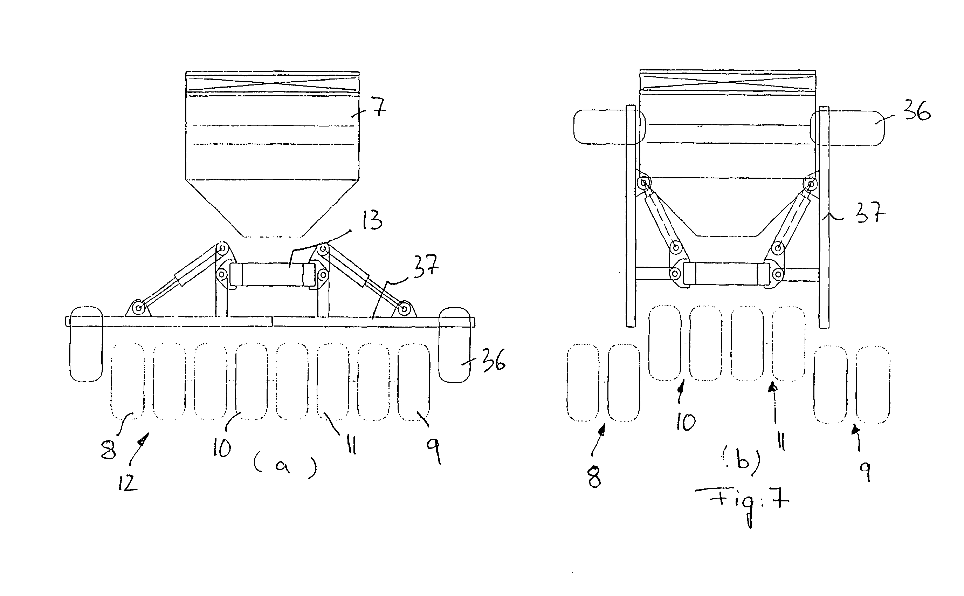

Gegebenenfalls kann der Schwingenanordnung der mittleren Reifensätze 10 und 11 auch eine Anhebevorrichtung zugeordnet sein, mit Hilfe derer die mittleren Reifensätze dann, wenn die Verriegelungseinrichtung 25 entriegelt ist, aktiv angehoben werden können. Eine solche Ausführung zeigt Figur 7. Die Anhebevorrichtung kann beispielsweise in Form eines Hydraulikzylinders ausgebildet sein, der zwischen eine jeweilige der Schwingen 22 und 23 und dem Fahrwerksrahmen 13 geschaltet ist. Dabei könnte einerseits durch Betreiben eines solchen Hydraulikzylinders in Schwimmstellung bewirkt werden, dass die mittleren Reifensätze bei geöffneter Verriegelungseinrichtung schwimmend über den Boden laufen, während sie andererseits durch aktives Anheben vom Boden abgehoben werden könnten. Zudem könnte durch Ausfahren und Sperren eines solchen Hydraulikzylinders die Verriegelungseinrichtung 25 zwischen Schwinge und Schwingenträger entfallen und von dem Hydraulikzylinder gebildet werden. Vorzugsweise jedoch ist die mechanische Verriegelungseinrichtung in der in Figur 3 gezeigten Ausführung vorhanden.

Weiterhin umfasst das in Figur 3 gezeigte Fahrwerk zwei zuschaltbare äußere Reifen 36, die mit einem Schwenkmechanismus 37 für den Transport der Maschine nach oben und/oder hinten geschwenkt werden können, um hierdurch die Maschinenbreite zu reduzieren.

## Patentansprüche

1. Fahrwerk für eine landwirtschaftliche Bodenbearbeitungsmaschine, mit mehreren nebeneinander in Reihe angeordneten Reifensätzen (8, 9, 10, 11), die einen Reifenpack (12) nach Art einer unterteilten Walze bilden, **dadurch gekennzeichnet, dass** ein mittlerer, zwischen zwei Seitenreifensätzen (8, 9) angeordneter Reifensatz (10, 11) relativ zu den Seitenreifensätzen (8, 9) höhenbeweglich gelagert ist und eine Verriegelungseinrichtung (25) vorgesehen ist, mittels derer der mittlere Reifensatz (10, 11) in einer Arbeitsstellung auf Höhe der Seitenreifensätze (8, 9) verriegelbar und in eine höhenbewegliche Fahrtstellung entriegelbar ist.

2. Fahrwerk nach dem vorhergehenden Anspruch, wobei die Seitenreifensätze (8, 9) und der damit verriegelte mittlere Reifensatz (10, 11) gemeinsam höheneinstellbar gelagert sind.

3. Fahrwerk nach einem der vorhergehenden Ansprüche, wobei der mittlere Reifensatz (10, 11) an einer vorzugsweise etwa parallel zur Fahrtrichtung verlaufenden Schwinge (22, 23) gelagert ist, die schwenkbar an einem Schwingenträger (15, 16) gelagert ist und mittels der Verriegelungseinrichtung (25) relativ zu dem Schwingenträger verriegelbar ist.

4. Fahrwerk nach dem vorhergehenden Anspruch, wobei an dem Schwingenträger (15, 16) zumindest eine weitere Schwinge (18, 19) befestigt ist, die einen Seitenreifensatz (8, 9) trägt.

5. Fahrwerk nach einem der beiden vorhergehenden Ansprüche, wobei der Schwingenträger (15, 16) selbst schwenkbar gelagert ist, wobei vorzugsweise ein Schwenkantrieb (20), insbesondere ein an einer Seitenreifensatzschwinge (18, 19) angelenkter Hydraulikzylinder (21), zum Schwenken des Schwingenträgers und gemeinsamen Höhenverstellen von mittlerem Reifensatz (10, 11) und Seitenreifensätzen (8, 9) vorgesehen ist.

6. Fahrwerk nach einem der vorhergehenden Ansprüche, wobei die Verriegelungseinrichtung (25) einen Riegel (27) sowie einen fremdenergiegespeisten Riegelbetätiger (31) aufweist.

7. Fahrwerk nach dem vorhergehenden Anspruch, wobei der Riegel eine schwenkbare Riegelklaue (27) bildet und der Riegelbetätiger (31) ein daran angelenkter Kraftheber (32) ist.

8. Fahrwerk nach einem der vorhergehenden Ansprüche, wobei die Verriegelungseinrichtung (25) an der den mittleren Reifensatz (10, 11) tragenden Schwinge (22, 23) angeordnet ist und einen schwingenträgerstarren Anschlag (26) von unten her umgreift.

9. Fahrwerk nach einem der vorhergehenden Ansprüche, wobei ein Querträger vorgesehen ist, an dem ein rechter Schwingenträger (16), der einen rechten Seitenreifensatz (9) trägt, und ein linker Schwingenträger (15), der einen linken Seitenreifensatz (8) trägt, um koaxiale Drehachsen drehbar gelagert sind, wobei die beiden Schwingenträger (15, 16) durch die Verriegelungseinrichtung (25) für den mittleren Reifensatz (10, 11) miteinander bezüglich der Drehachse koppelbar und voneinander entkoppelbar sind.

10. Fahrwerk nach dem vorhergehenden Anspruch, wobei an jedem der Schwingenträger (15, 16) jeweils ein mittlerer Reifensatz (10, 11) über eine Schwinge (22, 23) gelagert ist, wobei die Schwingen (22, 23) über einen Querträger (24) starr miteinander verbunden und mittels der Verriegelungseinrichtung (25) jeweils mit dem linken Schwingenträger (15) bzw. dem rechten Schwingenträger (16) verriegelbar sind.

11. Fahrwerk nach einem der vorhergehenden Ansprüche, wobei die Verriegelungseinrichtung (25) zwei gegensinnig schwenkbare Riegelklauen (27) umfasst, die mittels eines gemeinsamen Krafthebers (32) auseinander und zusammen schwenkbar sind.

12. Fahrwerk nach einem der vorhergehenden Ansprüche, wobei zumindest sechs Räder (8, 9, 10, 11) nebeneinander in einer Reihe vorgesehen sind.

## Claims

1. Wheeled support for an agricultural soil working machine, with a plurality of tyre sets (8, 9, 10, 11) which are arranged next to one another in a row and form a tyre pack (12) in the manner of a divided roller, **characterized in that** a central tyre set (10, 11) arranged between two side tyre sets (8, 9) is mounted in a vertically movable manner relative to the side tyre sets (8, 9), and a locking device (25) is provided, by means of which the central tyre set (10, 11) can be locked level with the side tyre sets (8, 9) in a working position and can be released into a vertically movable travel position.

2. Wheeled support according to the preceding claim, wherein the side tyre sets (8, 9) and the central tyre set (10, 11) locked thereto are mounted in a manner such that they can be adjusted in height together.

3. Wheeled support according to one of the preceding claims, wherein the central tyre set (10, 11) is mounted on a rocker (22, 23) which preferably runs approximately parallel to the direction of travel and is mounted pivotably on a rocker support (15, 16) and can be locked relative to the rocker support by means of the locking device (25).

4. Wheeled support according to the preceding claim, wherein at least one further rocker (18, 19) which supports a side tyre set (8, 9) is fastened to the rocker support (15, 16).

5. Wheeled support according to one of the two preceding claims, wherein the rocker support (15, 16) itself is mounted pivotably, and wherein preferably a pivoting drive (20), in particular a hydraulic cylinder (21) coupled to a side tyre set rocker (18, 19), is provided for pivoting the rocker support and for adjusting the height of the central tyre set (10, 11) and side tyre sets (8, 9) together.

6. Wheeled support according to one of the preceding claims, wherein the locking device (25) has a bolt (27) and a bolt actuator (31) which is fed by external power.

7. Wheeled support according to the preceding claim, wherein the bolt forms a pivotable bolt claw (27) and the bolt actuator (31) is a power lifter (32) which is coupled thereto.

8. Wheeled support according to one of the preceding claims, wherein the locking device (25) is arranged on the rocker (22, 23) supporting the central tyre set (10, 11), and engages from below around a stop (26) which is rigid on the rocker support.

9. Wheeled support according to one of the preceding claims, wherein a crossmember is provided, on which a right rocker support (16), which supports a right side tyre set (9), and a left rocker support (15), which supports a left side tyre set (8), are mounted rotatably about coaxial axes of rotation, and wherein the two rocker supports (15, 16) can be coupled to each other with respect to the axis of rotation and can be decoupled from each other by the locking device (25) for the central tyre set (10, 11).

10. Wheeled support according to the preceding claim, wherein a respective central tyre set (10, 11) is mounted via a rocker (22, 23) on each of the rocker supports (15, 16), and wherein the rockers (22, 23) are connected rigidly to each other via a crossmember (24) and can be respectively locked to the left rocker support (15) and the right rocker support (16) by means of the locking device (25).

11. Wheeled support according to one of the preceding claims, wherein the locking device (25) comprises two bolt claws (27) which can be pivoted in opposite directions and can be pivoted apart and together by means of a common power lifter (32).

12. Wheeled support according to one of the preceding claims, wherein at least six wheels (8, 9, 10, 11) are provided next to one another in a row.

## Revendications

1. Support à roues pour une machine agricole de travail de sol, avec plusieurs jeux de pneus (8, 9, 10, 11) disposés les uns à côté des autres en rangées, qui forment un paquet de pneus (12) à la manière d'un cylindre divisé, **caractérisé en ce qu'**un jeu de pneus médian (10, 11) disposé entre deux jeux de pneus latéraux (8, 9) est logé d'une manière déplaçable en hauteur relativement aux jeux de pneus latéraux (8, 9) et qu'une installation de verrouillage (25) est prévue au moyen de laquelle le jeu de pneus médian (10, 11) est verrouillable dans une position de travail à la hauteur des jeux de pneus latéraux (8, 9) et est déverrouillable en une position de marche déplaçable en hauteur.

2. Support à roues selon la revendication précédente, où les jeux de pneus latéraux (8, 9) et le jeu de pneus médians (10, 11) verrouillé avec ceux-ci sont logés d'une manière réglable en hauteur conjointement.

3. Support à roues selon l'une des revendications précédentes, où le jeu de pneus médians (10, 11) est logé à une bielle oscillante (22, 23) s'étendant de préférence à peu près parallèlement à la direction de marche, qui est logée d'une manière pivotante à un porte-bielle (15, 16) et est verrouillable au moyen de l'installation de verrouillage (25) relativement au porte-bielle.

4. Support à roues selon la revendication précédente, où est fixé au porte-bielle (15, 16) au moins une autre bielle (18, 19) qui porte un jeu de pneus latéral (8, 9).

5. Support à roues selon l'une des deux revendications précédentes, où le porte-bielle (15, 16) est logé lui-même d'une manière pivotante, où de préférence une commande de pivotement (20), en particulier un vérin hydraulique (21) articulé à une bielle de jeux de pneus latéraux (18, 19) est prévu pour le pivotement du porte-bielle et le réglage commun en hauteur du jeu de pneus médian (10, 11) et des jeux de pneus latéraux (8, 9).

6. Support à roues selon l'une des revendications précédentes, où l'installation de verrouillage (25) présente un verrou (27) ainsi qu'un actionneur de verrou (31) alimenté en énergie de réseau.

7. Support à roues selon la revendication précédente, où le verrou forme une griffe de verrou pivotante (27), et l'actionneur de verrou (31) est un vérin hydraulique (32) articulé à celle-ci.

8. Support à roues selon l'une des revendications précédentes, où l'installation de verrouillage (25) est disposée à la bielle (22, 23) portant le jeu de pneus médian (10, 11) et entoure une butée solidaire du porte-bielle (26) depuis en dessous.

9. Support à roues selon l'une des revendications précédentes, où une traverse est prévue à laquelle sont logés un porte-bielle droit (16), qui porte un jeu de pneus latéral droit (9) et un porte-bielle gauche (15), qui porte un jeu de pneus latéral gauche (8), d'une manière tournante autour d'axes de rotation coaxiaux, où les deux porte-bielles (15, 16) peuvent être couplés et découplés par l'installation de verrouillage (25) pour le jeu de pneus médian (10, 11) l'un avec l'autre relativement à l'axe de rotation.

10. Support à roues selon la revendication précédente, où est logé à chacun des porte-bielles (15, 16) respectivement un jeu de pneus médian (10, 11) par une bielle (22, 23), où les bielles (22, 23) sont reliées rigidement l'une à l'autre par une traverse (24) et sont verrouillables au moyen de l'installation de verrouillage (25) chacune avec le porte-bielle gauche (15) respectivement le porte-bielle droit (16).

11. Support à roues selon l'une des revendications précédentes, où l'installation de verrouillage (25) comprend deux griffes de verrou (27) apte à pivoter en sens opposé, qui peuvent pivoter au moyen d'un vérin hydraulique commun (32) l'une au loin de l'autre et l'une vers l'autre.

12. Support à roues selon l'une des revendications précédentes, où sont prévues au moins six roues (8, 9, 10, 11) les unes à côté des autres en une rangée.
